# EUROPÄISCHE PATENTSCHRIFT

(11) **EP 2 272 633 B1**
(45) Veröffentlichungstag und Bekanntmachung des Hinweises auf die Patenterteilung: **17.09.2014**
(21) Anmeldenummer: 10008874.9
(22) Anmeldetag: 28.11.2007
(51) Int. Cl.: B25F 5/00, B23Q 11/00, B24B 55/06, F16L 37/127, B24B 55/10, B24B 7/18

(54) **Vorrichtung zum Verbinden einer Werkstück-Bearbeitungsmaschine mit einem Absaugschlauch**
Device for connecting a workpiece processing machine with a suction tube
Dispositif pour relier une machine d'usinage de pièce à un tuyau d'aspiration

(30) Priorität: 21.02.2007 DE 102007008388
(43) Veröffentlichungstag der Anmeldung: 12.01.2011
(62) Teilanmeldung aus: 07023016.4
(73) Patentinhaber: Festool Group GmbH & Co. KG, 73240 Wendlingen am Neckar (DE)
(72) Erfinder: Tulodziecki, Stefan, 73765 Neuhausen (DE); Rapp, Sybille, 73054 Eislingen (DE)
(74) Vertreter: Bregenzer, Michael

(56) Entgegenhaltungen:
- EP-A- 0 377 946
- EP-A1- 1 361 020
- DE-U1- 20 016 447
- US-A- 4 473 923

## Beschreibung

Die Erfindung betrifft eine Vorrichtung zum Verbinden einer Staubabsaugmittel aufweisenden Werkstück-Bearbeitungsmaschine mit einem Absaugschlauch, wobei der Absaugschlauch ein mit einem maschinenseitigen Anschlussstück zusammensteckbares Schlauchendstück aufweist, gemäß dem Oberbegriff des Anspruchs 1.

Eine derartige Vorrichtung geht aus EP 0 377 946 A1 hervor.

Werkstück-Bearbeitungsmaschinen wie Schleifmaschinen oder dergleichen sind häufig mit Staubabsaugmitteln ausgestattet, sodass der bei der Werkstückbearbeitung entstehende Staub nicht in die Umgebung gelangt, sondern abgeführt werden kann. Die Staubabsaugmittel bestehen regelmäßig aus geeignet angeordneten Luftführungskanälen oder dergleichen, durch die der mit dem Staub beladene Luftstrom zum maschinenseitigen Anschlussstück gelangt, an den der zu einem Staubsauger führende Absaugschlauch angeschlossen wird.

Je nach Art der Bearbeitungsmaschine und dem jeweiligen Anwendungsfall wird die Maschine bei der Werkstückbearbeitung mehr oder weniger weit hin und her bewegt. Diese Bewegungen belasten die Steckverbindung zwischen dem maschinenseitigen Anschlagstück und dem Schlauchendstück, sodass die Gefahr eines Abgleitens des Schlauchendstücks besteht.

Ausgehend hiervon liegt der vorliegenden Erfindung die Aufgabe zugrunde, eine Vorrichtung der eingangs genannten Art zu schaffen, mit der man einen sicheren Halt des Schlauchendstücks am maschinenseitigen Anschlagstück erhält.

Diese Aufgabe wird durch eine Vorrichtung gemäß der technischen Lehre des Anspruchs 1 gelöst.

Maschinenseitig ist im Bereich des Anschlussstücks ein zwischen einer unwirksamen Stellung und einer wirksamen Stellung verschwenkbares Schwenkelement mit einer Hintergreifeinrichtung angeordnet und das Schlauchendstück weist radial vorstehende Haltemittel auf, derart, dass bei mit dem Anschlussstück zusammengestecktem Schlauchendstück das Schwenkelement in seiner wirksamen Stellung mit seiner Hintergreifeinrichtung die Haltemittel des Schlauchendstücks hintergreift.

Auf diese Weise wird das Schlauchendstück sicher am Anschlussstück gehalten. Die in Längsrichtung des angesteckten Schlauchendstücks ausgeübten Kräfte werden von der Hintergreifeinrichtung aufgenommen und über das Schwenkelement in das maschinenseitige Anschlussstück abgeleitet. Auf diese Weise erhält man sozusagen eine Zugentlastung für die Steckverbindung.

Zum Anstecken und Wegziehen des Schlauchendstücks muss das Schwenkelement lediglich in seine unwirksame Stellung verschwenkt werden, sodass sich die Hintergreifeinrichtung des Schwenkelements abseits des Schlauchendstücks befindet.

Es ist ersichtlich, dass die erfindungsgemäße Vorrichtung sehr einfach in der Handhabung ist. Ferner ist das Schwenkelement mit der Hintergreifeinrichtung verhältnismäßig einfach und kostengünstig zu realisieren.

Zweckmäßige Ausgestaltungen sind in den Unteransprüchen angegeben.

Nachstehend wird ein Ausführungsbeispiel der Erfindung anhand der Zeichnung im Einzelnen erläutert. Es zeigen:
- Figur 1: eine strichpunktiert grob angedeutete Werkstück- Bearbeitungsmaschine in Gestalt eines Langhals- schleifers zusammen mit einer erfindungsgemäßen Verbindungsvorrichtung in Seitenansicht bei vom ma- schinenseitigen Anschlussstück entferntem Schlauch- endstück, wobei sich das Schwenkelement in seiner unwirksamen Stellung befindet,
- Figur 2: die Verbindungsvorrichtung nach Figur 1 ohne die sonstige Bearbeitungsmaschine in Draufsicht,
- Figur 3: die gleiche Verbindungsvorrichtung in Schrägan- sicht,
- Figur 4: das maschinenseitige Anschlussstück im Querschnitt gemäß der Schnittlinie B-B in Figur 1,
- Figur 5: das maschinenseitige Anschlussstück in der Blick- richtung der Querschnittsdarstellung in Figur 4 entgegengesetzter Stirnansicht,
- Figur 6: die gleiche Verbindungsvorrichtung im Längsschnitt gemäß der Schnittlinie A-A in Figur 2,
- Figur 7: das maschinenseitige Anschlussstück der gleichen Verbindungsvorrichtung im zur Figur 6 parallelen Längsschnitt gemäß der Schnittlinie C-C in Figur 2,
- Figur 8: die Verbindungsvorrichtung nach den Figuren 1 bis 7 im zusammengesteckten Zustand im der Figur 6 ent- sprechenden Längsschnitt, wobei das Schwenkelement in eine Zwischenstellung zwischen seiner unwirksa- men Stellung und seiner wirksamen Stellung verschwenkt ist,
- Figur 9: die Anordnung nach Figur 8 im der Figur 7 entspre- chenden Längsschnitt,
- Figur 10: die Anordnung nach den Figuren 7 und 8 im der Figur 4 entsprechenden Querschnitt,
- Figur 11: die zusammengesteckte Verbindungsvorrichtung in der Figur 3 entsprechender Schrägansicht, wobei das Schwenkelement seine wirksame Stellung einnimmt, sodass das Schlauchendstück mit dem maschinenseiti- gen Anschlussstück verriegelt ist,
- Figur 12: die Anordnung nach Figur 11 im der Figur 4 entspre- chenden Querschnitt,
- Figur 13: die Anordnung nach Figur 11 im der Figur 6 entspre- chenden Längsschnitt und
- Figur 14: die Anordnung nach Figur 11 im der Figur 7 entspre- chenden Längsschnitt.

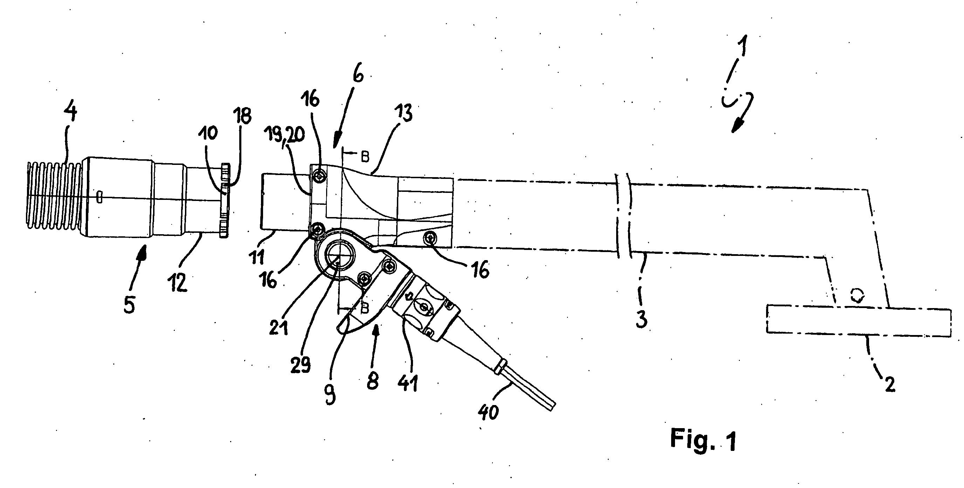

In Figur 1 ist eine bei ihrer Benutzung von Hand gehaltene Werkstück-Bearbeitungsmaschine 1 in Gestalt eines sogenannten Langhalsschleifers angedeutet, der zum Schleifen von Decken und Wänden von Gebäuderäumen verwendet werden kann und hierzu einen motorisch antreibbaren Schleifteller 2 und einen stielartig langen Haltekörper 3 aufweist, mit dem der Abstand des Benutzers zum Schleifteller 2 überbrückt wird.

Die nachstehend beschriebene Verbindungsvorrichtung ist jedoch auch für andere Werkstück-Bearbeitungsmaschinen geeignet, bei deren Anwendung Staub entsteht.

Die Bearbeitungsmaschine 1 enthält Staubabsaugmittel, wie sie bei derartigen Maschinen üblich sind. Bei den Staubabsaugmitteln handelt es sich um schleiftellerseitige Öffnungen und die Maschine durchziehende Kanäle oder dergleichen, durch die hindurch der bei der Werkstückbearbeitung anfallende Staub abgesaugt werden kann. Hierzu dient ein abseits der Bearbeitungsmaschine 1 angeordneter Staubsauger, der über einen Absaugschlauch 4 mit der Maschine 1 verbunden wird.

Der Absaugschlauch 4 weist ein Schlauchendstück 5 auf, das mit einem maschinenseitigen Anschlussstück 6 zusammengesteckt werden kann. Das Anschlussstück 6 enthält einen Kanalabschnitt 7, zu dem der am Werkstück entstehende Staub geführt wird. Der Staub gelangt dann in das angesteckte Schlauchendstück 5 und durch den Absaugschlauch 4 zum Staubsauger.

Beim Betrieb wird die Bearbeitungsmaschine 1 vom Benutzer hin und her bewegt. Daher treten an der von dem Schlauchendstück 5 und dem Anschlussstück 6 gebildeten Verbindungsvorrichtung Kräfte auf, die ohne die nachstehend beschriebenen Maßnahmen zu einem Lösen des Schlauchendstücks 5 vom Anschlussstück 6 führen können.

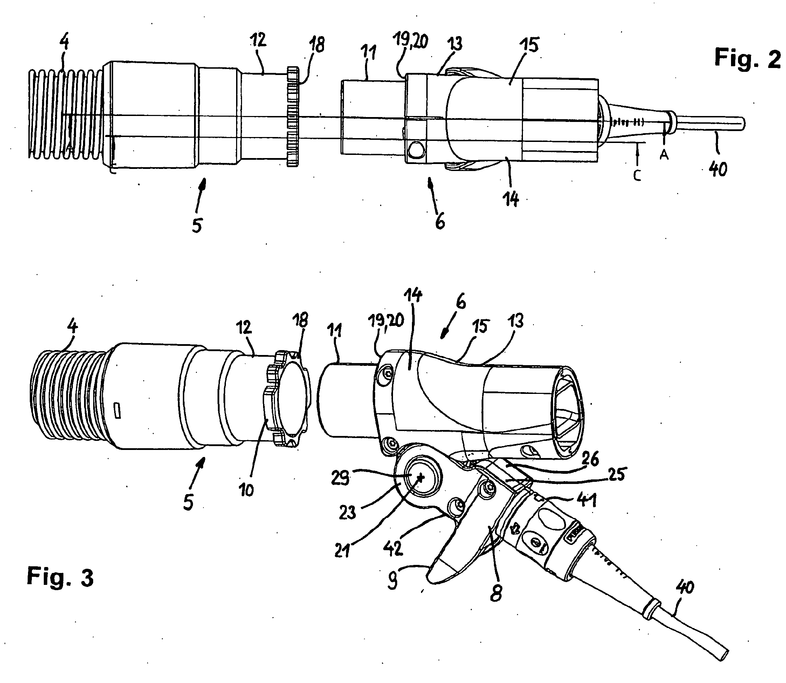

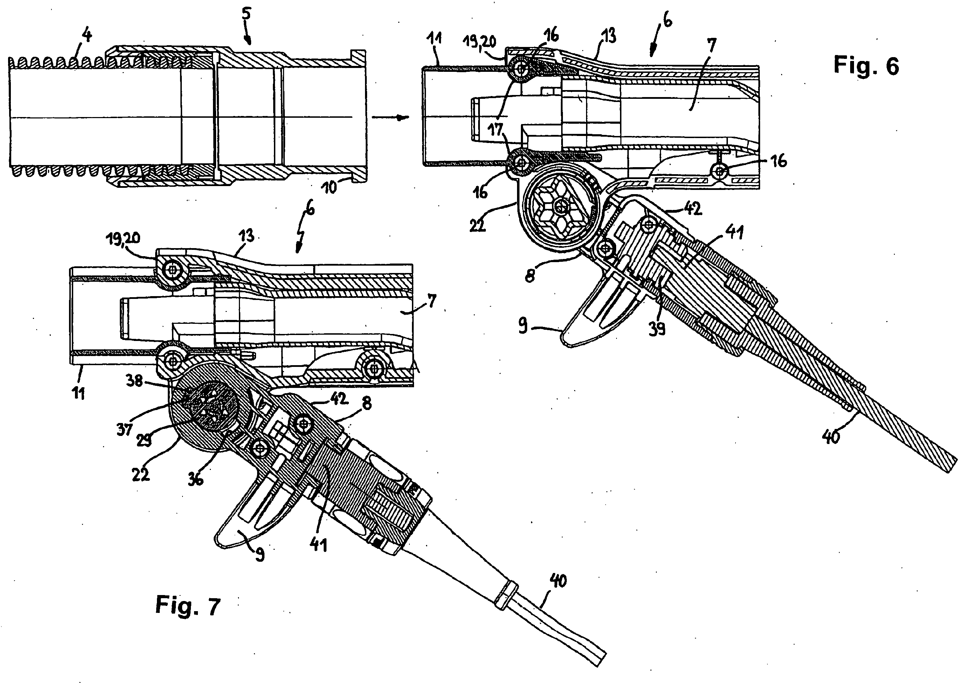

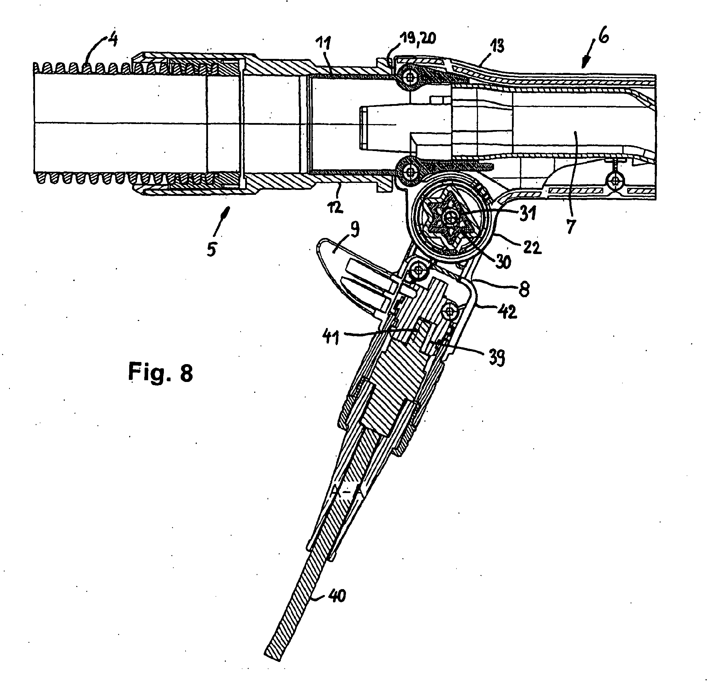

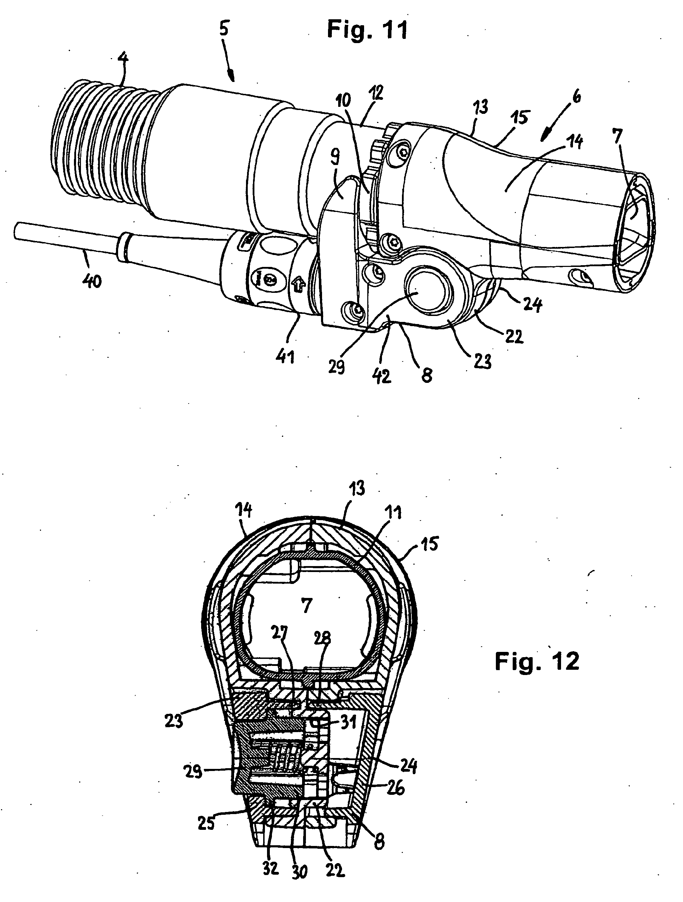

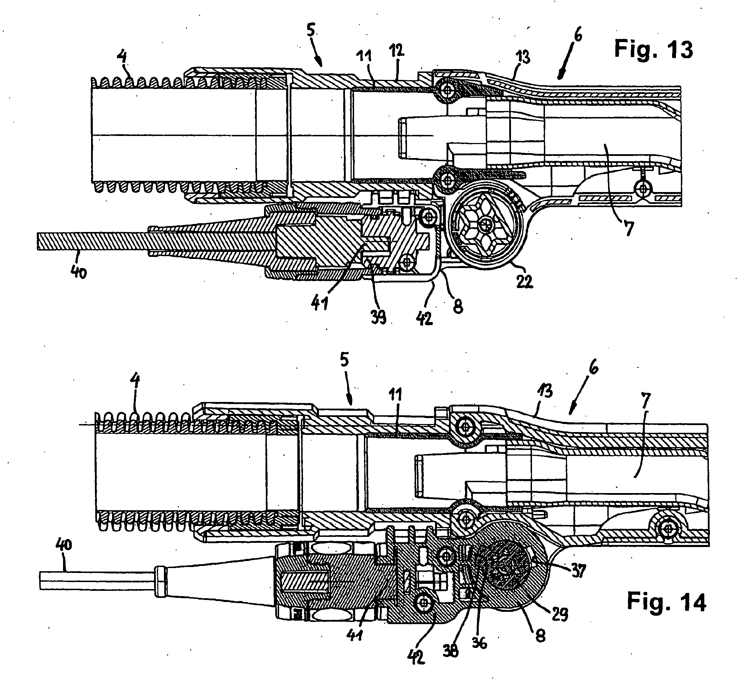

Um dieser Gefahr zu begegnen, ist maschinenseitig im Bereich des Anschlussstücks 6 ein zwischen einer unwirksamen Stellung (Figuren 1 bis 7; in der aus den Figuren 8 bis 10 hervorgehenden Zwischenstellung ist das Schwenkelement 8 ebenfalls unwirksam) und einer wirksamen Stellung (Figuren 11 bis 14) verschwenkbares Schwenkelement 8 angeordnet, das eine Hintergreifeinrichtung 9 aufweist. Das Schlauchendstück 5 weist der Hintergreifeinrichtung 9 zugeordnete, radial vorstehende Haltemittel 10 auf, wobei die Anordnung so getroffen ist, dass bei mit dem Anschlussstück 6 zusammengestecktem Schlauchendstück 5 das Schwenkelement 8 in seiner wirksamen Stellung mit der Hintergreifeinrichtung 9 die Haltemittel 10 des Schlauchendstücks 5 hintergreift. Auf diese Weise werden in Richtung eines Wegziehens des Schlauchendstücks 5 vom Anschlussstück 6 auftretende Kräfte von der Hintergreifeinrichtung 9 und somit über das Schwenkelement 8 vom Anschlussstück 6 aufgenommen. Dies ergibt eine sichere Verriegelung des Schlauchendstücks 5 mit dem Anschlussstück 6.

Das Anschlussstück 6 enthält einen mit dem Schlauchendstück 5 zusammensteckbaren Steckstutzen 11. Ferner ist beim dargestellten Ausführungsbeispiel vorgesehen, dass das Schlauchendstück 5 auf das Anschlussstück, das heißt im dargestellten Falle auf den Steckstutzen 11, aufgesteckt wird. Prinzipiell wäre jedoch auch ein Einstecken des Schlauchendstücks in das Anschlussstück möglich.

Das Schlauchendstück 5 bildet eine auf das maschinenseitige Anschlussstück 6 steckbare Aufsteckmuffe 12.

Die Haltemittel 10, die in der wirksamen Stellung des Schwenkelements 8 von der Hintergreifeinrichtung 9 hintergriffen werden, stehen zweckmäßigerweise flanschartig vom Schlauchendstück 5 ab. Die Haltemittel 10 sind ferner am Stirnende des Schlauchendstücks 5 angeordnet. Sie könnten jedoch auch mit Abstand zur Stirnseite des Schlauchendstücks vorgesehen sein.

Die Haltemittel 10 sind einstückig an das Schlauchendstück 5 angeformt.

Das Anschlussstück 6 bildet ein Rohrelement 13, an dem das Schwenkelement 8 gelagert ist, wobei der Steckstutzen 11 vor das Rohrelement 13 vorsteht. Der Steckstutzen 11 greift von der Stirnseite her in das Rohrelement 13 ein und ist in diesem festgelegt.

Das Rohrelement 13 besteht aus zwei Halbschalen 14, 15, zwischen die der in das Rohrelement 13 eingreifende Bereich des Steckstutzens 11 eingesetzt ist. Die beiden Halbschalen 14, 15 können beispielsweise mittels Verbindungsschrauben 16 miteinander verbunden sein. Dabei können eine oder mehrere der Verbindungsschrauben 16 entsprechend verdickte Partien 17 des den Steckstutzen 11 bildenden Teils durchgreifen, sodass gleichzeitig der Steckstutzen 11 fixiert wird.

Das Rohrelement 13 kann einen Handgriff für den Benutzer bilden und an seiner Außenseite entsprechend geformt sein.

Das Schlauchendstück 5 und das Anschlussstück 6 weisen einander zugeordnete, das Zusammenstecken begrenzende Anschlagflächen 18, 19 auf. Beim Zusammenstecken des Schlauchendstücks 5 mit dem Anschlussstück 6 gelangt die Anschlagfläche 18 des Schlauchendstücks 5 zur Anlage an die Anschlagfläche 19 des Anschlussstücks 6. In der wirksamen Stellung des Schwenkelements 8 hält die Hintergreifeinrichtung 9 das Schlauchendstück 5 gegen die Anschlagfläche 19 des Anschlussstücks 6. Die Anschlagfläche 19 des Anschlussstücks 6 wird zweckmäßigerweise von einem radialen Ringabsatz 20 am Anschlussstück 6 gebildet. Beim zweckmäßigen Ausführungsbeispiel ist der Steckstutzen 11 in das Rohrelement 13 eingesteckt, sodass sich an der Stirnseite des Rohrelements 13 der genannte Ringabsatz 20 ergibt, an dem die Stirnseite des Schlauchendstücks 5 zur Anlage gelangt, die die Anschlagfläche 18 bildet.

Das Schwenkelement 8 ist um eine quer zur Steckrichtung, in der das Schlauchendstück 5 und das Anschlussstück 6 zusammengesteckt werden, gerichtete Schwenkachslinie 21 schwenkbar gelagert. Dabei verläuft die Schwenklagerung etwa tangential zum Anschlussstück 6. Zweckmäßigerweise weist das Anschlussstück 6 einen seitlich abstehenden Lagervorsprung 22 zur Schwenklagerung des Schwenkelements 8 auf. Der Lagervorsprung 22 ist im dargestellten Falle am Rohrelement 13 des Anschlussstücks 6 angeordnet. Dabei setzt sich der Lagervorsprung 22 aus zwei jeweils zu einer der beiden Halbschalen 14, 15 gehörenden Partien zusammen.

Das Schwenkelement 8 übergreift den Lagervorsprung 22 gabelartig. Hierzu weist das Schwenkelement 8 zwei Gabelschenkel 23, 24 auf. Das Schwenkelement 8 besteht ebenfalls wie das Rohrelement 13 aus zwei Halbschalen 25, 26, die durch aus der Zeichnung ersichtliche Verbindungsschrauben miteinander verbunden sein können und jeweils einen der Gabelschenkel 23, 24 bilden. Die beiden Gabelschenkel 23, 24 stehen jeweils in Schwenklagereingriff mit dem Lagervorsprung 22, beispielsweise indem sie einen kreis- oder kreisbogenförmigen, axial gerichteten Ringvorsprung 27, 28 aufweisen, der in eine entsprechend kreis- oder kreisbogenförmige Lagernut am Lagervorsprung 22 eingreift.

Die Hintergreifeinrichtung 9 weist zweckmäßigerweise eine U-artige Gestalt auf, sodass die Hintergreifeinrichtung 9 beim Überführen des Schwenkelements 8 in seine wirksame Stellung von der Seite her gegen das Schlauchendstück 5 geschwenkt wird und das Schlauchendstück 5 unter Hintergreifen der Haltemittel 10 seitlich übergreift.

Es versteht sich, dass die Hintergreifeinrichtung 9 in einem solchen Abstand zur Schwenkachslinie 21 vom Schwenkelement 8 absteht, dass sie in der wirksamen Stellung die Haltemittel 10 möglichst spielfrei hintergreift.

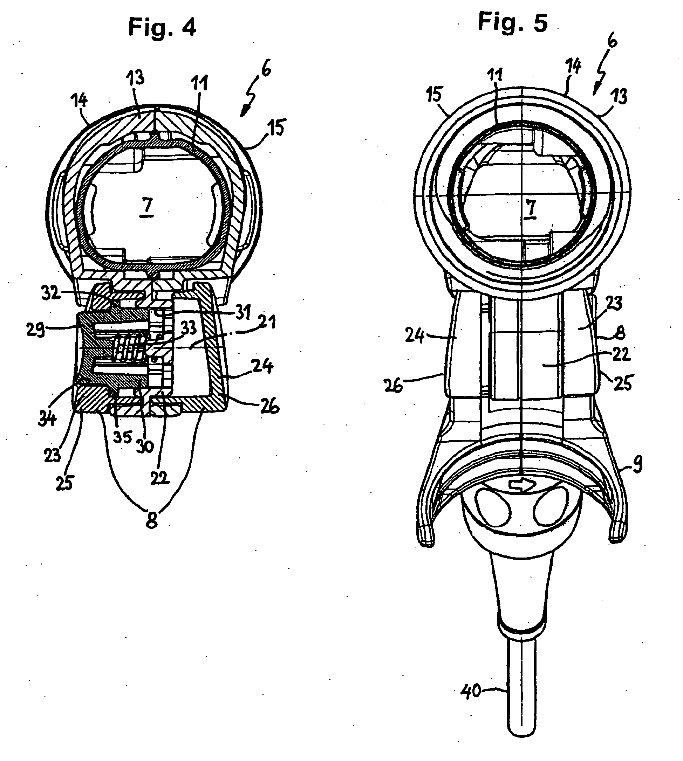

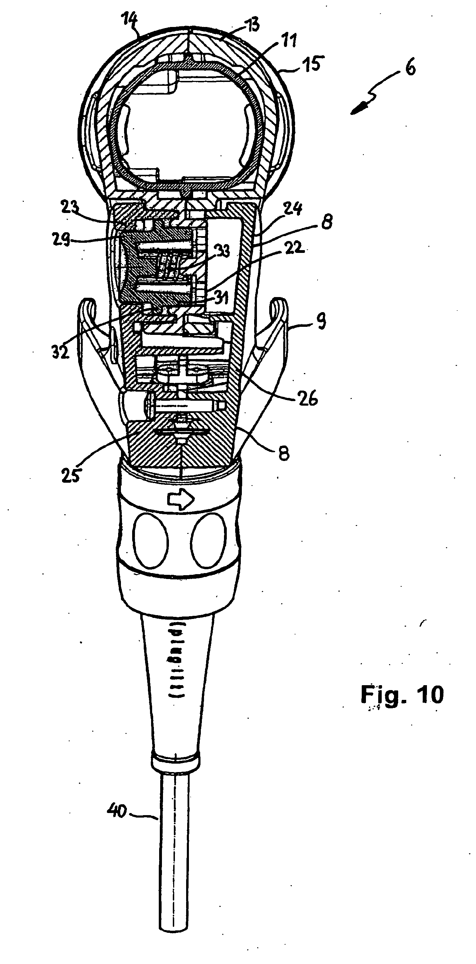

Das Schwenkelement 8 ist mindestens in seiner wirksamen Stellung, zweckmäßigerweise auch in der unwirksamen Stellung, lösbar feststellbar oder festgestellt. Dies kann durch Verriegeln erfolgen. Hierzu kann ein zur Schwenkachslinie 21 koaxialer Betätigungsknopf 29 vorhanden sein, der mit Bezug auf das Anschlussstück 6 drehfest angeordnet und von außen her entgegen einer Federkraft aus einer in axialer Richtung außen angeordneten Verriegelungsstellung (siehe insbesondere die Figuren 4 und 12) in eine weiter innen angeordnete Lösestellung (siehe insbesondere die Figur 10) bewegbar ist.

Der Betätigungsknopf 29 weist eine innere Partie 30 mit einem mehrkantigen, im dargestellten Falle sternartig aussehenden Außenumfang auf, die in eine entsprechend konturierte Lagerausnehmung 31 des Lagervorsprungs 22 des Anschlussstücks 6 eingreift und somit verdrehfest gelagert, dabei jedoch axial bewegbar angeordnet ist.

Das Schwenkelement 8, im dargestellten Falle der Gabelschenkel 23, umschließt den Betätigungsknopf 29 und dreht sich beim Verschwenken des Schwenkelements 8 um diesen. Dabei ist die Anordnung so getroffen, dass das Schwenkelement 8 in der Verriegelungsstellung des Betätigungsknopfes 29 mit diesem verriegelt und in der nach innen gedrückten Lösestellung des Betätigungsknopfes entriegelt ist.

Der Betätigungsknopf 29 wird, wie bereits erwähnt, durch eine Federkraft nach axial außen gedrückt. Diese Federkraft wird durch eine Schraubenfeder 33 aufgebracht, die sich einerseits am Lagervorsprung 22 und andererseits innen im Betätigungsknopf 29 abstützt.

Die axiale Lage des Betätigungsknopfes 29 in seiner Verriegelungsstellung wird durch einen radial vorstehenden Anschlagkörper 32 des Betätigungsknopfes 29 definiert. Die den Betätigungsknopf 29 aufnehmende Ausnehmung 34 des Gabelschenkels 23 ist gestuft, wobei der Anschlagkörper 32 des Betätigungsknopfes 29 in einem im Durchmesser größeren Ausnehmungsbereich angeordnet ist, sodass die Stufenfläche 35 der Ausnehmung 34 einen Gegenanschlag für den Anschlagkörper 32 bildet und somit ein Austreten des Betätigungsknopfes 29 verhindert.

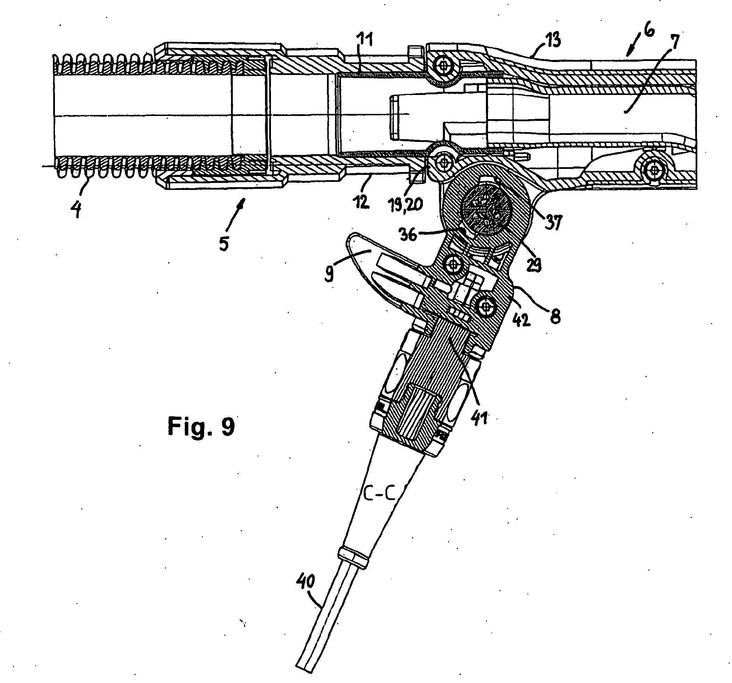

Zum Verriegeln des Schwenkelements 8 mit dem Anschlussstück 6 in seiner wirksamen Stellung und seiner unwirksamen Stellung weist das Schwenkelement 8 am Innenumfang seiner den Betätigungsknopf 29 lagernden Ausnehmung 34 zwei Rastnuten 36, 37 auf, die in Umfangsrichtung um den Winkelabstand zwischen der wirksamen Stellung und der unwirksamen Stellung des Schwenkelements 8 versetzt zueinander angeordnet sind. Den beiden Rastnuten 36, 37 ist ein Rastvorsprung 38 am unverdrehbar angeordneten Betätigungsknopf 29 zugeordnet. In der Verriegelungsstellung des Betätigungsknopfes 29 (Figuren 4, 7 und 12, 14) greift der Rastvorsprung 38 in der wirksamen Stellung des Schwenkelements 8 in die eine Rastnut 36 und in der unwirksamen Stellung des Schwenkelements 8 in die andere Rastnut 37 ein. Drückt man den Betätigungsknopf 29 entgegen der Federkraft (Schraubenfeder 33) nach innen in seine Lösestellung (Figuren 9, 10), tritt der Rastvorsprung 38 aus der jeweiligen Rastnut 36, 37 aus, sodass das Schwenkelement 8 entriegelt ist und verschwenkt werden kann.

Am Schwenkelement 8 ist eine elektrische Steckkontakteinrichtung 39 zum Anschließen eines elektrischen Versorgungskabels 40 angeordnet, das einen mit der Steckkontakteinrichtung 39 lösbar zusammensteckbaren Anschlussstecker 41 aufweist. Dabei ist die Anordnung zweckmäßigerweise so getroffen, dass das Versorgungskabel 40 am der Schwenkachslinie 21 entgegengesetzten Ende des Schwenkelements 8 in mit Bezug auf die Schwenkachslinie 21 im Wesentlichen radialer Richtung anschließbar ist.

Das Schwenkelement 8 weist in Seitenansicht eine etwa L-förmige Gestalt auf, wobei die Hintergreifeinrichtung 9 etwa L-förmig von der sich in radialer Richtung von der Schwenkachslinie 21 weg erstreckenden Partie 42 des Schwenkelements 8 absteht. An der Stirnseite dieser Schwenkelementpartie 42 ist die Steckkontakteinrichtung 39 angeordnet.

Das Schwenkelement 8 ist in seiner wirksamen Stellung so ausgerichtet und die Steckkontakteinrichtung 39 ist so am Schwenkelement 8 angeordnet, dass das angeschlossene Versorgungskabel 40 im Wesentlichen parallel zum Saugschlauch 4 abgeht, wie aus den Figuren 11, 13 und 14 ersichtlich ist.

In seiner unwirksamen Stellung ist das Schwenkelement 8 mit Bezug auf seine wirksame Stellung um einen stumpfen Winkel von beispielsweise etwa 145° verschwenkt, sodass das angeschlossene Versorgungskabel 40 spitzwinkelig zum Anschlussstück 6 in Richtung vom Anschlussstückende weg absteht (siehe die Figuren 1, 3, 6 und 7). Dies bringt den Vorteil mit sich, dass man das Versorgungskabel 40 bei Nichtgebrauch der Bearbeitungsmaschine, wenn diese in einem Aufbewahrungsbehälter untergebracht wird, angesteckt lassen kann.

Die die elektrische Steckkontakteinrichtung 39 mit dem dem Schleifteller 2 zugewandt angeordneten Antriebsmotor der Bearbeitungsmaschine bzw. mit einer Steuereinrichtung für den Antriebsmotor verbindenden elektrischen Verbindungsleitungen sind nicht dargestellt. Sie können über die von dem Anschlussstück 6 und dem Schwenkelement 8 gebildete Gelenkstelle in das Rohrelement 13 und dabei zweckmäßigerweise in einen vom Kanalabschnitt 7 abgetrennten Kabelkanal und von dort weitergeführt werden.

## Patentansprüche

1. Vorrichtung zum Verbinden einer Staubabsaugmittel aufweisenden Werkstück-Bearbeitungsmaschine mit einem Absaugschlauch, wobei der Absaugschlauch ein mit einem maschinenseitigen Anschlussstück zusammensteckbares Schlauchendstück aufweist, wobei maschinenseitig im Bereich des Anschlussstücks (6) ein zwischen einer unwirksamen Stellung und einer wirksamen Stellung verschwenkbares Schwenkelement (8) mit einer Hintergreifeinrichtung (9) angeordnet ist und das Schlauchendstück (5) radial vorstehende Haltemittel (10) aufweist, derart, dass bei mit dem Anschlussstück (6) zusammengestecktem Schlauchendstück (5) das Schwenkelement (8) in seiner wirksamen Stellung mit seiner Hintergreifeinrichtung (9) die Haltemittel (10) des Schlauchendstücks (5) hintergreift, **dadurch gekennzeichnet, dass** am Schwenkelement (8) eine elektrische Steckkontakteinrichtung (39) zum Anschließen eines elektrischen Versorgungskabels (40) angeordnet ist.

2. Vorrichtung nach Anspruch 1, **dadurch gekennzeichnet, dass** das Schlauchendstück (5) auf das Anschlussstück (6) aufsteckbar ist und/oder dass das Anschlussstück (6) einen mit dem Schlauchendstück (5) zusammensteckbaren Steckstutzen (11) aufweist.

3. Vorrichtung nach Anspruch 2, **dadurch gekennzeichnet, dass** das Schlauchendstück (5) eine auf das maschinenseitige Anschlussstück (6) steckbare Aufsteckmuffe (12) bildet.

4. Vorrichtung nach einem der Ansprüche 1 bis 3, **dadurch gekennzeichnet, dass** die Haltemittel (10) flanschartig vom Schlauchendstück (5) abstehen und/oder dass die Haltemittel (10) am Stirnende des Schlauchendstücks (5) angeordnet sind.

5. Vorrichtung nach einem der vorhergehenden Ansprüche, **dadurch gekennzeichnet, dass** das Schlauchendstück (5) und das Anschlussstück (6) einander zugeordnete, das Zusammenstecken begrenzende Anschlagflächen (18, 19) aufweisen, wobei zweckmäßigerweise die Anschlagfläche (19) des Anschlussstücks (6) von einem radialen Ringabsatz (20) gebildet wird.

6. Vorrichtung nach einem der vorhergehenden Ansprüche, **dadurch gekennzeichnet, dass** das Schwenkelement (8) um eine quer zur Steckrichtung gerichtete Schwenkachslinie (21) schwenkbar ist.

7. Vorrichtung nach Anspruch 6, **dadurch gekennzeichnet, dass** die Hintergreifeinrichtung (9) eine U-artige Gestalt aufweist, sodass die Hintergreifeinrichtung (9) beim Überführen des Schwenkelements (8) in seine wirksame Stellung von der Seite her gegen das Schlauchendstück (5) geschwenkt wird und das Schlauchendstück (5) seitlich übergreift.

8. Vorrichtung nach einem der vorhergehenden Ansprüche, **dadurch gekennzeichnet, dass** das Schwenkelement (8) mindestens in seiner wirksamen Stellung lösbar feststellbar oder festgestellt ist, wobei zweckmäßigerweise das Schwenkelement (8) in seiner wirksamen Stellung mit dem Anschlussstück (6) lösbar verriegelbar oder verriegelt ist.

9. Vorrichtung nach Anspruch 8, **dadurch gekennzeichnet, dass** ein zur Schwenkachslinie (21) koaxialer Betätigungsknopf (29) vorhanden ist, der mit Bezug auf das Anschlussstück (6) drehfest angeordnet und von außen her entgegen einer Federkraft aus einer in axialer Richtung außen angeordneten Verriegelungsstellung in eine weiter innen angeordnete Lösestellung bewegbar ist, wobei das Schwenkelement (8) den Betätigungsknopf (29) umschließt und in der Verriegelungsstellung des Betätigungsknopfes (29) mit diesem verriegelt und in der Lösestellung des Betätigungsknopfes (29) entriegelt ist.

10. Vorrichtung nach einem der vorhergehenden Ansprüche, **dadurch gekennzeichnet, dass** das Versorgungskabel (40) am der Schwenkachslinie (21) abgewandten Ende des Schwenkelements (8) in mit Bezug auf die Schwenkachslinie (21) im Wesentlichen radialer Richtung anschließbar ist.

11. Vorrichtung nach einem der vorhergehenden Ansprüche, **dadurch gekennzeichnet, dass** das Schwenkelement (8) in seiner wirksamen Stellung so ausgerichtet und die Steckkontakteinrichtung (39) so am Schwenkelement (8) angeordnet ist, dass das angeschlossene Versorgungskabel (40) im Wesentlichen parallel zum Saugschlauch (4) abgeht.

12. Vorrichtung nach einem der vorhergehenden Ansprüche, **dadurch gekennzeichnet, dass** das Schwenkelement (8) in seiner unwirksamen Stellung so ausgerichtet und die Steckkontakteinrichtung (39) so am Schwenkelement (8) angeordnet ist, dass das angeschlossene Versorgungskabel (40) spitzwinkelig zum Anschlussstück (6) in Richtung vom Anschlussstückende weg abgeht.

13. Vorrichtung nach einem der vorhergehenden Ansprüche, **dadurch gekennzeichnet, dass** das Anschlussstück (6) einen seitlich abstehenden Lagervorsprung (22) zur Schwenklagerung des Schwenkelements (8) aufweist, wobei das Schwenkelement (8) den Lagervorsprung (22) zweckmäßigerweise gabelartig übergreift.

14. Vorrichtung nach einem der vorhergehenden Ansprüche, **dadurch gekennzeichnet, dass** das Anschlussstück (6) ein Rohrelement (13) bildet, an dem das Schwenkelement (8) seitlich gelagert ist, wobei der Steckstutzen (11) vor das Rohrelement (13) vorsteht.

15. Vorrichtung nach Anspruch 14, **dadurch gekennzeichnet, dass** der Steckstutzen (11) in das Rohrelement (13) eingreift und in diesem festgelegt ist und/oder dass das Rohrelement (13) einen Handgriff für den Benutzer bildet.

## Claims

1. Device for connecting a workpiece machining machine having dust extraction means to an extraction tube, the extraction tube having a tube end piece which can be plugged together with a machine-side connecting piece, wherein a swivel element (8) pivotable between an inoperative position and an operative position and comprising a device (9) for engagement from behind is placed on the machine side in the region of the connecting piece (6) and the tube end piece (5) has radially projecting retaining means (10), so that, if the connecting piece (6) is plugged together with the tube end piece (5), the swivel element (8) engages in its operative position the retaining means (10) of the tube end piece (5) from behind with its device (9) for engagement from behind, **characterised in that** an electric plug contact device (39) is provided at the swivel element (8) for connecting an electric supply cable (40).

2. Device according to claim 1, **characterised in that** the tube end piece (5) can be plugged onto the connecting piece (6), and/or **in that** the connecting piece (6) has a plug connector (11) which can be plugged together with the tube end piece (5).

3. Device according to claim 2, **characterised in that** the tube end piece (5) forms a plug-on sleeve (12) which can be plugged onto the machine-side connecting piece (6).

4. Device according to any of claims 1 to 3, **characterised in that** the retaining means (10) project from the tube end piece (5) in the manner of a flange, and/or **in that** the retaining means (10) are located at the end face of the tube end piece (5).

5. Device according to any of the preceding claims, **characterised in that** the tube end piece (5) and the connecting piece (6) have stop faces (18, 19) assigned to one another and limiting the plugging-together action, the stop face (19) of the connecting piece (6) being expediently represented by a radial annular shoulder (20).

6. Device according to any of the preceding claims, **characterised in that** the swivel element (8) is pivotable about a pivot axis line (21) oriented perpendicular to the plugging direction.

7. Device according to claim 6, **characterised in that** the device (9) for engagement from behind has a U-shape, so that the device (9) for engagement from behind is pivoted from the side against the tube end piece (5) and laterally overlaps the tube end piece (5) when the swivel element (8) is moved into its operative position.

8. Device according to any of the preceding claims, **characterised in that** the swivel element (8) is releasably located or locatable at least in its operative position, the swivel element (8) being expediently releasably interlockable or interlocked with the connecting piece (6) in its operative position.

9. Device according to claim 8, **characterised in that** an operating button (29) is provided, which is coaxial with the swivel axis line (21), non-rotatably located relative to the connecting piece (6) and movable from the outside against the force of a spring from a locking position situated on the outside in the axial direction into a release position situated farther inward, the swivel element (8) enclosing the operating button (29), being interlocked therewith in the locking position of the operating button (19) and unlocked in the release position of the operating button (19).

10. Device according to any of the preceding claims, **characterised in that** the supply cable (40) can be connected to the end of the swivel element (8) which is remote from the swivel axis line (21) in a substantially radial direction relative to the swivel axis line (21).

11. Device according to any of the preceding claims, **characterised in that** the swivel element (8) is, in its operative position, oriented in such a way and the plug contact device (39) is arranged on the swivel element (8) in such a way that the connected supply cable (40) emerges substantially parallel to the suction tube (4).

12. Device according to any of the preceding claims, **characterised in that** the swivel element (8) is, in its inoperative position, oriented in such a way and the plug contact device (39) is arranged on the swivel element (8) in such a way that the connected supply cable (40) emerges in the direction away from the connecting piece end at an acute angle relative to the connecting piece (6).

13. Device according to any of the preceding claims, **characterised in that** the connecting piece (6) has a laterally protruding bearing projection (22) for the pivotable mounting of the swivel element (8), the swivel element (8) expediently encompassing the bearing projection (22) in the manner of a fork.

14. Device according to any of the preceding claims, **characterised in that** the connecting piece (6) forms a tubular element (13) on which the swivel element (8) is pivotably mounted, the plug connector (11) projecting in front of the tubular element (13).

15. Device according to claim 14, **characterised in that** the plug connector (11) engages with the tubular element (13) and is located therein, and/or **in that** the tubular element (13) forms a handle for the user.

## Revendications

1. Dispositif servant à relier une machine d'usinage de pièce présentant des moyens d'aspiration de la poussière à un tuyau flexible d'aspiration, sachant que le tuyau flexible d'aspiration présente un embout de tuyau flexible pouvant être assemblé par emboîtement à un raccord côté machine, sachant qu'est disposé, côté machine, dans la zone du raccord (6), un élément de pivotement (8) pouvant pivoter entre une position active et une position inactive, ledit élément de pivotement étant pourvu d'un système d'engrènement par l'arrière (9), et que l'embout de tuyau flexible (5) présente des moyens de maintien (10) faisant saillie radialement, de telle manière que, lorsque l'embout de tuyau flexible (5) est assemblé par insertion au raccord (6), l'élément de pivotement (8) vient en prise par l'arrière, dans sa position active, par son système d'engrènement par l'arrière (9), avec les moyens de maintien (10) de l'embout de tuyau flexible (5), **caractérisé en ce qu'**un système de contact électrique à insérer (39) servant à raccorder un câble d'alimentation électrique (40) est disposé au niveau de l'élément de pivotement (8).

2. Dispositif selon la revendication 1, **caractérisé en ce que** l'embout de tuyau flexible (5) peut être emboîté sur le raccord (6), et/ou **en ce que** le raccord (6) présente une tubulure à insérer (11) pouvant être assemblée par insertion à l'embout de tuyau flexible (5).

3. Dispositif selon la revendication 2, **caractérisé en ce que** l'embout de tuyau flexible (5) forme un manchon à emboîter (12) pouvant être emboîté sur le raccord (6) côté machine.

4. Dispositif selon l'une quelconque des revendications 1 à 3, **caractérisé en ce que** les moyens de maintien (10) dépassent de l'embout de tuyau flexible (5) à la manière d'une bride, et/ou **en ce que** les moyens de maintien (10) sont disposés au niveau de l'extrémité frontale de l'embout de tuyau flexible (5).

5. Dispositif selon l'une quelconque des revendications précédentes, **caractérisé en ce que** l'embout de tuyau flexible (5) et le raccord (6) présentent des surfaces de butée (18, 19) associées l'une à l'autre, délimitant l'assemblage par insertion, sachant que la surface de butée (19) du raccord (6) est formée de manière appropriée par un épaulement annulaire (20) radial.

6. Dispositif selon l'une quelconque des revendications précédentes, **caractérisé en ce que** l'élément de pivotement (8) peut pivoter autour d'une ligne axiale de pivotement (21) orientée de manière transversale par rapport au sens d'insertion.

7. Dispositif selon la revendication 6, **caractérisé en ce que** le système d'engrènement par l'arrière (9) présente une forme en U, de sorte que le système d'engrènement par l'arrière (9) est pivoté, lors du passage de l'élément de pivotement (8), dans sa position active, depuis le côté à l'opposé de l'embout de tuyau flexible (5) et recouvre latéralement l'embout de tuyau flexible (5).

8. Dispositif selon l'une quelconque des revendications précédentes, **caractérisé en ce que** l'élément de pivotement (8) peut être immobilisé ou est immobilisé de manière amovible au moins dans sa position active, sachant que l'élément de pivotement (8) peut être verrouillé ou est verrouillé, dans sa position active, de manière amovible au raccord (6).

9. Dispositif selon la revendication 8, **caractérisé en ce qu'**un bouton d'actionnement (29) coaxial par rapport à la ligne axiale de pivotement (21) est présent, lequel est disposé de manière solidaire en rotation par rapport au raccord (6) et qui peut être déplacé depuis l'extérieur, à l'encontre d'une force de ressort, depuis une position de verrouillage disposée côté extérieur dans le sens axial dans une position de déblocage disposée davantage côté intérieur, sachant que l'élément de pivotement (8) renferme le bouton d'actionnement (29) et est verrouillé avec le bouton d'actionnement (29) lorsque celui-ci se trouve dans la position de verrouillage et est déverrouillé lorsque le bouton d'actionnement (29) se trouve dans la position de déblocage.

10. Dispositif selon l'une quelconque des revendications précédentes, **caractérisé en ce que** le câble d'alimentation (40) peut être raccordé au niveau de l'extrémité, opposée à la ligne axiale de pivotement (21), de l'élément de pivotement (8) dans la direction essentiellement radiale par rapport à la ligne axiale de pivotement (21).

11. Dispositif selon l'une quelconque des revendications précédentes, **caractérisé en ce que** l'élément de pivotement (8) est orienté dans sa position active de telle sorte et que le système de contact à insérer (39) est disposé au niveau de l'élément de pivotement (8) de telle sorte que le câble d'alimentation (40) raccordé part essentiellement de manière parallèle par rapport au tuyau flexible d'aspiration (4).

12. Dispositif selon l'une quelconque des revendications précédentes, **caractérisé en ce que** l'élément de pivotement (8) est orienté dans sa position inactive de telle sorte et que le système de contact à insérer (39) est disposé au niveau de l'élément de pivotement (8) de telle sorte que le câble d'alimentation (40) raccordé s'éloigne de l'embout de raccord de manière à former un angle aigu avec le raccord (6).

13. Dispositif selon l'une quelconque des revendications précédentes, **caractérisé en ce que** le raccord (6) présente une partie faisant saillie de palier (22) dépassant latéralement aux fins de l'installation par pivotement de l'élément de pivotement (8), sachant que l'élément de pivotement (8) recouvre la partie faisant saillie de palier (22) de manière appropriée à la manière d'une fourche.

14. Dispositif selon l'une quelconque des revendications précédentes, **caractérisé en ce que** le raccord (6) forme un élément tubulaire (13), au niveau duquel est logé sur le côté l'élément de pivotement (8), sachant que la tubulure à insérer (11) fait saillie devant l'élément tubulaire (13).

15. Dispositif selon la revendication 4, **caractérisé en ce que** la tubulure à insérer (11) vient en prise avec l'élément tubulaire (13) et est fixée dans celui-ci, et/ou **en ce que** l'élément tubulaire (13) forme un manche pour l'utilisateur.
